# EUROPÄISCHE PATENTSCHRIFT

(11) **EP 0 985 215 B1**
(45) Veröffentlichungstag und Bekanntmachung des Hinweises auf die Patenterteilung: **03.08.2005**
(21) Anmeldenummer: 98928166.2
(22) Anmeldetag: 18.05.1998
(51) Int. Cl.: G21C 19/317, G21C 9/06

(54) **Sicherheitsbehälter einer kerntechnischen Anlage mit einem Zündsystem zur Rekombination von Wasserstoff in einem Gasgemisch.**
Safetyvessel for a nuclear installation with an ignition system for recombining Hydrogen in a gas mixture.
Enceinte de confinement d'une installation nucléaire avec un système d'amorcage pour recombiner l'hydrogène dans un mélange gazeux.

(30) Priorität: 27.05.1997 DE 19722165
(43) Veröffentlichungstag der Anmeldung: 15.03.2000
(73) Patentinhaber: Framatome ANP GmbH, 91058 Erlangen (DE)
(72) Erfinder: ECKARDT, Bernd, D-63486 Bruchköbel (DE); HILL, Axel, D-64589 Stockstadt (DE)
(74) Vertreter: Tergau & Pohl Patentanwälte
(86) Internationale Anmeldenummer: PCT/DE1998/001378
(87) Internationale Veröffentlichungsnummer: WO 1998/054731

(56) Entgegenhaltungen:
- EP-A- 0 289 907
- DE-A- 3 820 187
- DE-A- 3 833 401
- US-A- 5 108 696
- HECK R: "Catalytic and spark hydrogen igniters" KERNTECHNIK, Bd. 53, Nr. 1, 1988, Seiten 56-58, XP002076491

## Beschreibung

Die Erfindung bezieht sich auf einen Sicherheitsbehälter einer kerntechnischen Anlage mit einem Zündsystem mit einer Anzahl von Funkenzündern zur Rekombination von Wasserstoff in einem Gasgemisch.

Ein derartiger Sicherheitsbehälter ist aus der DE-A-38 20 187 bekannt.

In einer kerntechnischen Anlage, insbesondere in einem Kernkraftwerk, muß bei Stör- oder Unfallsituationen, bei denen beispielsweise aufgrund von Kernaufheizung eine Oxidation von Zirkonium auftreten kann, mit der Bildung und Freisetzung von Wasserstoffgas und Kohlenmonoxid innerhalb des den Reaktorkern umschließenden Sicherheitsbehälters oder Containments gerechnet werden. Insbesondere nach einem Kühlmittelverluststörfall können dabei große Mengen an Wasserstoff freigesetzt werden. Dadurch können innerhalb des Containments explosive Gasgemische entstehen. Ohne Gegenmaßnahme ist dabei die Anreicherung von Wasserstoff in der Containment-Atmosphäre soweit möglich, daß bei einer zufälligen Zündung durch die Verbrennung einer größeren Menge an Wasserstoff die Integrität des Sicherheitsbehälters gefährdet sein könnte.

Zur Verhinderung der Bildung derartiger explosiver Gasgemische im Containment eines Kernkraftwerks werden verschiedene Einrichtungen oder Verfahren diskutiert. Hierzu gehören beispielsweise Einrichtungen wie katalytische Rekombinatoren, katalytisch und/oder elektrisch betriebene Zündeinrichtungen oder die Kombination der beiden vorgenannten Einrichtungen sowie Verfahren einer permanenten Inertisierung des Containments.

Beim Einsatz eines Zündsystems zur Beseitigung des Wasserstoffs aus der Atmosphäre des Containments soll eine zuverlässige Rekombination des Wasserstoff mit Sauerstoff mittels einer kontrollierten Verbrennung erreicht werden. Dabei soll ein signifikanter Druckaufbau als Folge einer virulenten Wasserstoffverbrennung sicher vermieden sein. Ein derartiges Zündsystem ist dabei üblicherweise derart ausgelegt, daß auch an der oberen Zündgrenze eines Gasgemisches, also bei einem Gasgemisch mit vergleichsweise hoher Wasserstoffkonzentration, eine zuverlässige Zündung des Wasserstoffs gewährleistet ist.

Aus der europäischen Patentschrift 0 596 964 ist ein kombiniertes Katalysator-Zündsystem zur Rekombination von Wasserstoff in einem Gasgemisch bekannt. Bei diesem System wird bei der katalytischen Rekombination von Wasserstoff an einem Katalysatorkörper gewonnene Wärme einer Zündvorrichtung zugeleitet und dort zur Zündung von Wasserstoff verwendet. Bei einem derartigen kombinierten Katalysator-Zündsystem tritt die Zündung des Wasserstoffs jedoch erst nach dem Ablauf einer Zündverzugszeit nach der Freisetzung des Wasserstoffs ein. Nach der ersten Freisetzung des Wasserstoffs ist nämlich eine gewisse Zeit erforderlich, bis sich der Katalysatorkörper hinreichend erwärmt hat, um eine Zündung des Wasserstoffs zu ermöglichen. Diese Zeitverzögerung führt dazu, daß bei schnellen Gasverschiebevorgängen innerhalb des Containments die Zündung des Wasserstoffs erst bei vergleichsweise hohen Wasserstoffkonzentrationen einsetzt.

Ein aus der europäischen Patentschrift 0 289 907 bekanntes Zündsystem zur gesteuerten Zündung eines Wasserstoff enthaltenden Gasgemisches umfaßt einen Funkenzünder, der über einen integrierten Energiespeicher bespeisbar ist. Das Zündsystem ist dabei mit einem autark ausgelegten Energiespeicher versehen, so daß keine Zuleitungen erforderlich sind. Als Energiespeicher ist dabei insbesondere eine Trockenbatterie vorgesehen. Allerdings ist dieses Zündsystem aufgrund der Kapazität des integrierten Energiespeichers lediglich für eine begrenzte Laufzeit geeignet. Insbesondere bei einer frühzeitigen Anregung des Funkenzünders ist bei einem Störverlauf mit späterer Wasserstofffreisetzung eine gesteuerte Zündung des Wasserstoffs nur eingeschränkt möglich. Zudem reagiert dieses Zündsystem ebenfalls erst nach Ablauf einer Zündverzugszeit auf die Freisetzung von Wasserstoff. Auch ist ein Langzeitbetrieb des Zündsystems, der zur Abdeckung aller denkbaren Störfallszenarien erforderlich wäre, nur mit Einschränkungen möglich. Weiterhin ist eine vorsorgliche Anregung des Zündsystems bereits im Vorfeld eines sich anbahnenden Störfalles von einer externen Station, wie beispielsweise der Leitwarte einer Kraftwerksanlage, aus nicht möglich.

Der Erfindung liegt die Aufgabe zugrunde, einen gegen die Bildung eines explosiven Gasgemisches besonders abgesicherten Sicherheitsbehälter einer kerntechnischen Anlage anzugeben. Dabei soll ein Zündsystem mit einer Anzahl von Funkenzündern zur Rekombination von Wasserstoff in einem Gasgemisch, insbesondere für die Containment-Atmosphäre einer kerntechnischen Anlage, vorgesehen sein, mit dem auch bei vergleichsweise schnellen Gasverschiebevorgängen eine zuverlässige Zündung eines zündfähigen Gasgemischs gewährleistet ist.

Diese Aufgabe wird für einen Sicherheitsbehälter der obengenannten Art erfindungsgemäß dadurch gelöst, daß jeder Funkenzünder als Schnelltaktzünder mit einer Betriebsfrequenz von mehr als etwa 10 Hz ausgebildet ist.

Die Erfindung geht dabei von der Überlegung aus, daß für eine zuverlässige Zündung des Gasgemisches auch bei schnellen Gasverschiebevorgängen eine direkte Zündung des an dem oder jedem Funkenzünder vorbeiströmenden Gasgemisches auch bei einer Strömungsgeschwindigkeit von mehr als etwa 10 m/s gewährleistet sein sollte. Für eine zuverlässige Direktzündung eines mit einer derartig hohen Strömungsgeschwindigkeit strömenden Gasgemisches sind die Funkenzünder als Schnelltaktzünder mit einer entsprechend hohen Betriebsfrequenz ausgelegt. Durch das Schnelltakten wird weiterhin das umliegende Gasgemisch stark vorionisiert, so daß die Zündwahrscheinlichkeit steigt und somit eine zuverlässige Zündung bereits direkt nach Überschreiten der unteren Zündgrenze des Gasgemisches sichergestellt ist. Die Verbrennungslasten sind dabei im Vergleich zu einer späteren Zündung deutlich geringer.

In vorteilhafter Ausgestaltung sind die Funkenzünder dabei als Niederenergiezünder mit einer Betriebsleistung von weniger als 10W, vorzugsweise von weniger als 5 W, ausgebildet. Somit ist eine zuverlässige Energieversorgung der Funkenzünder mit besonders einfachen Mitteln realisierbar. Dabei können insbesondere Energieversorgungskabel mit besonders geringem Kabelquerschnitt vorgesehen sein. Die für diese Kabel erforderlichen Durchführungen durch den Sicherheitsbehälter der Kraftwerksanlage können somit entsprechend gering dimensioniert sein.

Um eine zuverlässige Zündung eines zündfähigen Gasgemisches sowohl beim kurzzeitigen Ausfall externer Aggregate als auch bei besonders langer Laufzeit des Zündsystems zu gewährleisten, sind die Funkenzünder vorteilhafterweise zur Energieversorgung gruppenweise zusammengeschaltet, wobei jeweils eine Gruppe von Funkenzündern an einen ihnen gemeinsamen Energiezwischenspeicher angeschlossen ist, und wobei die Energiezwischenspeicher an eine zentrale Energieversorgungseinheit angeschlossen sind. An jedem Energiezwischenspeicher kann dabei beispielsweise jeweils eine Gruppe von etwa 10 bis 20 Funkenzündern angeschlossen sein. Alternativ können aber auch sämtliche Funkenzünder an einen einzigen Energiezwischenspeicher angeschlossen sein.

Bei einem derartigen, zweistufig aufgebauten Energieversorgungssystem ist die Unabhängigkeit der Energieversorgung der Funkenzünder von externen Aggregaten zumindest für eine Übergangszeit durch die Energiezwischenspeicher sichergestellt. Andererseits ist das Zündsystem aber auch für eine besonders lange Betriebszeit von beispielsweise mehr als 5 Tagen geeignet, da die Energiezwischenspeicher über die zentrale Energieversorgung wieder aufladbar sind. Bei einem derartigen Energieversorgungssystem können die Energiezwischenspeicher auch lediglich beim Ausfall der zentralen Energieversorgung aktiviert sein, so daß die Verfügbarkeitsdauer der Energiezwischenspeicher besonders lang ist. Die zentrale Energieversorgung kann beispielsweise als Batterieanlage, als Notstrom-dieselnetz oder als ein separates Stromaggregat ausgebildet sein.

Als Energiezwischenspeicher können dabei Trockenbatterien vorgesehen sein. Zweckmäßigerweise sind die Energiezwischenspeicher jedoch als Niedervoltakkumulatoren ausgebildet. Das zweistufige Energieversorgungssystem erlaubt beispielsweise auch eine vorsorgliche Auslösung des Zündsystems bereits bei vergleichsweise geringen Wasserstoffkonzentrationen, ohne daß die Betriebszeit des Zündsystems bei einem lang anhaltenden Störfall eingeschränkt wäre. Insbesondere im Hinblick auf hohe Sicherheitsanforderungen bei der Vermeidung der Bildung explosiver Gasgemische im Containment einer kerntechnischen Anlage ist das Zündsystem somit besonders flexibel einsetzbar.

Für ein besonders zuverlässiges Ansprechen des Zündsystems auf eine beginnende Freisetzung von Wasserstoff umfaßt jeder Energiezwischenspeicher zweckmäßigerweise einen Selbstauslöser, der als Sensor für freigesetzten Wasserstoff einen katalytisch beschichteten Temperaturgeber und/oder einen integrierten Druckschalter aufweist. Mit anderen Worten: Zweckmäßigerweise sind die Auslöser für die Funkenzünder nicht in den Funkenzündern selbst, sondern vielmehr in den Energiezwischenspeichern angeordnet. Die Funkenzünder können somit in besonders kompakter Bauweise ausgeführt sein. Somit ist ein besonders effektiver Schutz der Funkenzünder auch gegen externe Temperatur- und Strahlungseinflüsse mit einfachen Mitteln ermöglicht. Insbesondere bei redundanter Ausbildung der Wasserstoffsensoren ist dabei eine frühzeitige und zuverlässige Früherkennung der Bildung von Wasserstoff gewährleistet.

Für einen besonders zuverlässigen Betrieb des Zündsystems auch bei verschiedenartigen Störfallszenarien sind zweckmäßigerweise für dessen wesentliche Komponenten Kühlvorrichtungen vorgesehen, die das Überschreiten zulässiger Maximaltemperaturen für die jeweiligen Komponenten sicher verhindern. Dazu weist zweckmäßigerweise jeder Energiezwischenspeicher eine Kühleinheit auf, mittels derer seine Betriebstemperatur bei verschiedenartigen Störfallszenarien sicher unterhalb von etwa 140°C, vorzugsweise 100°C, gehalten werden kann. Ein mit einer derartigen Kühleinheit versehener Energiezwischenspeicher ist auch innerhalb des Sicherheitsbehälters einer kerntechnischen Anlage anbringbar. Die Übertragungsmittel zur Bespeisung der an den jeweiligen Energiezwischenspeicher angeschlossenen Funkenzünder mit Zündenergie können somit mit besonders kurzen Übertragungswegen ausgeführt sein. Die Hochtemperaturfestigkeit des Zündsystems kann dabei durch einen weiteren Temperaturschutz mittels einer zusätzlichen Isolierung, mittels verlängerter Elektroden sowie durch die Verwendung von Metallmantelkabeln mit mineralischer Isolierung weiter verbessert sein.

In vorteilhafter Ausgestaltung ist das Gehäuse jedes Funkenzünders für eine besonders gute Kühlung des Funkenzünders auch bei erhöhter Temperatur- oder Strahlenbelastung ausgebildet. Dazu umfaßt das Gehäuse jedes Funkenzünders zweckmäßigerweise einen Isoliermantel. Dabei kann in der Art einer Doppelmantelausführung ein Luftspalt oder eine Vakuumisolierung oder auch ein temperatur- und strahlenbeständiger Isolierstoff vorgesehen sein. Jeder Funkenzünder weist dabei vorteilhafterweise zudem ein als Strahlenschutz für seine Zündelektronik ausgebildetes Innengehäuse auf.

Weiterhin ist jeder Funkenzünder zweckmäßigerweise mit einer integrierten Wärmesenke ausgerüstet, mittels derer die zur Zündungsauslösung vorgesehene Hochfrequenzelektronik des Funkenzünders auch bei variierender Temperatur- oder Strahlenbelastung wie beispielsweise in einer Hochtemperatursituation bei stehender Flamme auf einer Temperatur von weniger als etwa 150°C haltbar ist. Als integrierte Wärmesenke eignet sich dabei besonders ein im jeweiligen Funkenzünder vorgesehenes Wasserbad, bei dem das Wasser bei eintretender Erwärmung verdampft und durch die Verdampfungskälte die Zündelektronik des Funkenzünders kühlt. Eine derartig ausgebildete Wärmesenke arbeitet autark und unabhängig von externen Aggregaten, so daß ein besonders zuverlässiger Betrieb der jeweiligen Funkenzünder gewährleistet ist. Somit ist sichergestellt, daß die als Schnelltaktzünder ausgelegten Funkenzünder auch unter extremen Störfallbedingungen einfach und sicher einsetzbar sind.

Für eine besonders zuverlässige Langzeittemperaturbegrenzung seiner Zündelektronik weist jeder Funkenzünder dabei vorteilhafterweise jeweils eine mit einem Sicherheitsventil absperrbare Ablaßleitung für ein Kühlmittel auf. Aus jedem Funkenzünder ist somit Kühlmittel, beispielsweise verdampftes Wasser des als Wärmesenke vorgesehen Wasserbades derart dosiert abführbar, daß eine zuverlässige Kühlung durch Verdampfung des Kühlmittels auch über lange Zeiträume gewährleistet ist.

Zweckmäßigerweise sind sowohl eine Anzahl von Funkenzündern als auch die diesen zugeordneten Energiezwischenspeicher innerhalb des Innenraums des Sicherheitsbehälters angeordnet. Für eine besonders flexible und zuverlässige Rekombination sich bildenden Wasserstoffs können dabei zusätzlich zu den Funkenzündern noch weitere Rekombinationsvorrichtungen, beispielsweise katalytische Rekombinatoren, eingesetzt sein.

Die mit der Erfindung erzielten Vorteile bestehen insbesondere darin, daß durch die Auslegung der Funkenzünder als Schnelltaktzünder mit einer Betriebsfrequenz von mehr als etwa 10 Hz auch bei schnellen Gasverschiebevorgängen eine zuverlässige und frühzeitige Zündung eines zündfähigen Gasgemisches gewährleistet ist. Durch die starke Vorionisierung des Gasgemisches im Bereich der Elektroden des Funkenzünders aufgrund der hohen Taktfrequenz ist zudem die Zündwahrscheinlichkeit des Gasgemisches besonders hoch. Eine zuverlässige frühzeitige Zündung ist somit auch in wenig bewegter Atmosphäre sichergestellt. Durch die zweistufig ausgebildete Energieversorgung des Zündsystems ist zudem einerseits ein vorübergehend autarker, von externen Quellen unabhängiger Betrieb des Zündsystems möglich, wobei andererseits die volle Funktionsfähigkeit des Zündsystems auch bei langer Betriebsdauer gewährleistet ist. Insbesondere bei einer Energieversorgung der Funkenzünder über die zentrale externe Energieversorgungseinheit kann das Zündsystem auch vorsorglich bereits bei besonders geringen Wasserstoffkonzentrationen ausgelöst werden. Zudem ermöglicht die Auslagerung der Auslöser für die Funkenzünder und der Energieversorgung für die Funkenzünder in die Energiezwischenspeicher eine besonders kompakte Bauweise der Funkenzünder. Die Funkenzünder sind somit örtlich besonders flexibel einsetzbar, so daß das Zündsystem besonders gut an eine erwartete räumliche Verteilung der Freisetzung von Wasserstoff angepaßt sein kann.

Ein Ausführungsbeispiel der Erfindung wird anhand einer Zeichnung näher erläutert. Darin zeigen:
- Figur 1: auszugsweise einen Sicherheitsbälter einer kerntechnischen Anlage mit einem Zündsystem zur Rekombination von Wasserstoff in einem Gasgemisch, und
- Figur 2: einen Funkenzünder des Zündsystems aus Figur 1.

Gleiche Teile sind in beiden Figuren mit dem gleichen Bezugszeichen versehen.

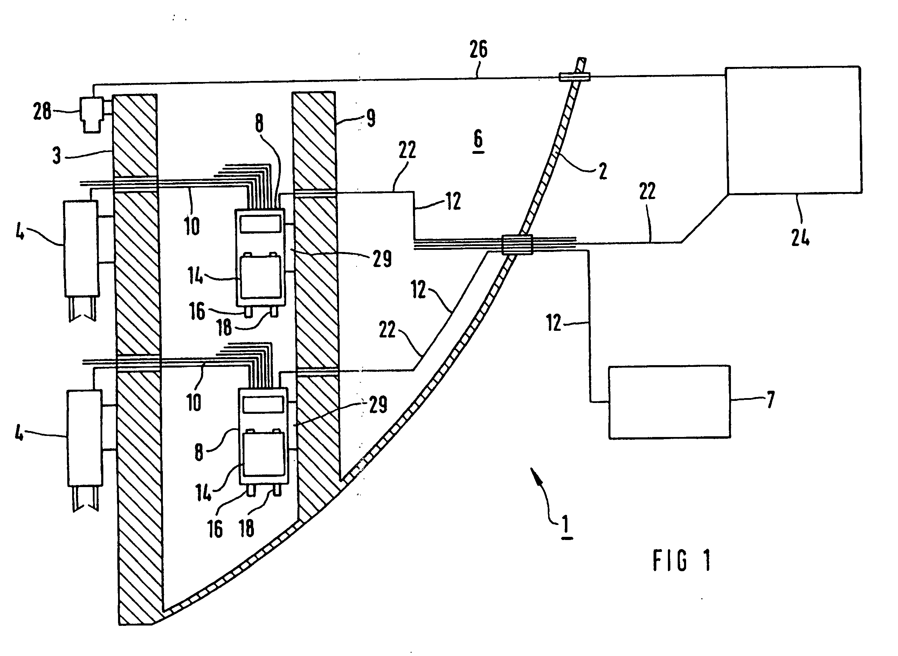

Das Zündsystem 1 gemäß Figur 1 ist zur Rekombination von Wasserstoff in einem Gasgemisch, nämlich in der Containment-Atmosphäre eines in Figur 1 auszugsweise dargestellten Sicherheitsbehälters 2 einer kerntechnischen Anlage, vorgesehen. Das Zündsystem 1 umfaßt dazu eine Anzahl von innerhalb des Sicherheitsbehälters 2 an einer Innenwand 3 angeordneten Funkenzündern 4, von denen jeder zur bedarfsweisen Erzeugung von Zündfunken zur kontrollierten Verbrennung von im Innenraum des Sicherheitsbehälters 2 freigesetztem Wasserstoff ausgelegt ist.

Zur Versorgung mit Zündenergie sind die Funkenzünder 4 an ein zweistufig ausgebildetes Energieversorgungssystem 6 angeschlossen. Das Energieversorgungssystem 6 umfaßt eine Anzahl von an eine zentrale Energieversorgungseinheit 7 angeschlossenen Energiezwischenspeichern 8. Im Ausführungsbeispiel sind als Energiezwischenspeicher 8 Niedervoltakkumulatoren vorgesehen. Alternativ können die Energiezwischenspeicher 8 aber auch als Trockenbatterien ausgebildet sein. Die Energiezwischenspeicher 8 sind innerhalb des Sicherheitsbehälters 2 an einer weiteren Innenwand 9 aufgehängt.

An jeden Energiezwischenspeicher 8 ist jeweils eine Gruppe von etwa 15 Funkenzündern 4 angeschlossen. Mit anderen Worten: Die Funkenzünder 4 sind zur Energieversorgung gruppenweise zusammengeschaltet, wobei jeweils eine Gruppe von Funkenzündern 4 an einen ihnen gemeinsamen Energiezwischenspeicher 8 angeschlossen ist. Die gruppenweise Zusammenschaltung der Funkenzünder 4 ist in Figur 1 durch die bündelweise Darstellung von Energieübertragungsleitungen 10 symbolisiert. Die Energieübertragungsleitungen 10 sind dabei in hochtemperaturistischer Ausführung als Metallmantelkabel mit Mineral stoffisolierung ausgebildet.

Eingangsseitig sind die Energiezwischenspeicher 8 über durch den Sicherheitsbehälter 2 geführte Versorgungsleitungen 12 an die zentrale Energieversorgungseinheit 7 angeschlossen. Jeder Energiezwischenspeicher 8 ist für eine Autarkiezeit von etwa 24 h ausgelegt und über die zentrale Energieversorgungseinheit 7 nachladbar. Als Energieversorgungseinheit 7 ist im Ausführungsbeispiel ein Notstrom-Dieselnetz vorgesehen. Alternativ kann aber auch eine separate Batterie oder ein anderes Stromaggregat vorgesehen sein.

Jeder der über jeweils eine Leitung 12 an die zentrale Energieversorgungseinheit 7 angeschlossenen Energiezwischenspeicher 8 umfaßt zur Auslösung eines Zündvorgangs einen Selbstauslöser 14 mit einem katalytisch beschichteten Temperaturgeber 16 und mit einem integrierten Druckschalter 18. Das Zündsystem 1 ist somit für eine redundant ausgebildete selbstauslösende Zünderzuschaltung in Abhängigkeit vom Druck und/oder von der Temperatur im Innenraum des Sicherheitsbehälters 2 ausgerüstet. Zusätzlich ist jeder Energiezwischenspeicher 8 über eine Signalleitung 22 an eine manuelles Auslösesystem 24 angeschlossen. Das Auslösesystem 24 kann dabei beispielsweise Teil der Leitwarte eines Kernkraftwerks sein. Eingangsseitig ist das Auslösesystem 24 über eine Signalleitung 26 mit einem Wasserstoffsensor 28 verbunden. Eine Energieversorgung der Funkenzünder 4 über die ihnen jeweils vorgeschalteten Energiezwischenspeicher 8 kann dabei alternativ über die in die Energiezwischenspeicher 8 jeweils integrierten Selbstauslöser 14 oder über das manuelle Auslösesystem 24 ausgelöst werden.

Weiterhin ist jeder Energiezwischenspeicher 8 mit einer integrierten Kühleinheit 29 als Wärmesenke ausgerüstet. Die Kühleinheit 29 ist dabei derart ausgelegt, daß auch bei einer Störfallsituation mit hoher Wärmefreisetzung eine Temperatur von 100°C im Inneren des Energiezwischenspeichers 8 nicht überschritten wird. Die Energiezwischenspeicher 8 sind somit auch in der Ausführung als Niedervoltakkumulatoren bei einer großen Vielzahl an Störfallszenarien sicher betreibbar.

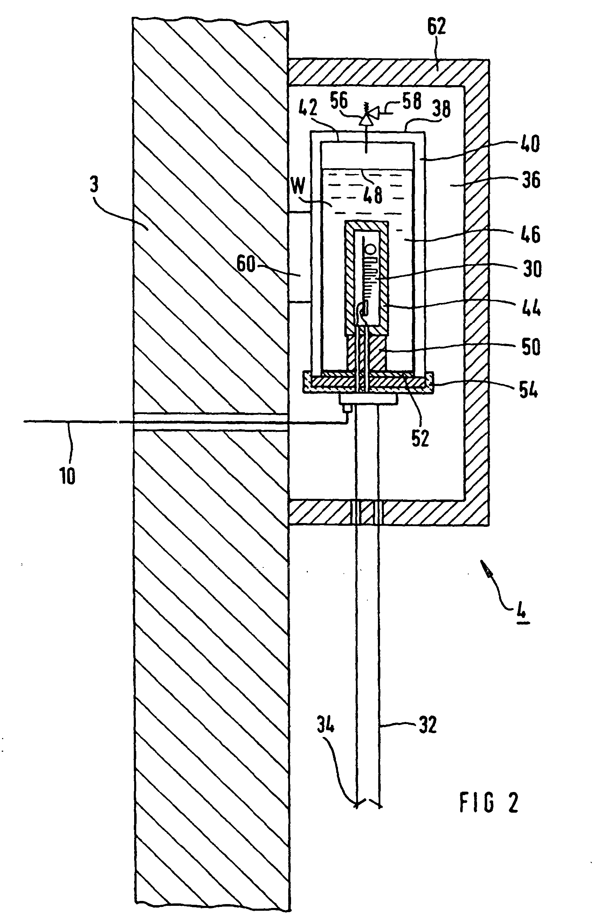

Ein Funkenzünder 4 des Zündsystems 1 ist schematisch in Figur 2 dargestellt. Der Funkenzünder 4 ist als Schnelltaktzünder mit einer Betriebsfrequenz von etwa 100 Hz und als Niederenergiezünder mit einer Betriebsleistung von etwa 5 W ausgelegt und umfaßt dazu eine Zündelektronik 30, die als wesentliche Komponenten einen Taktgenerator, einen Hochspannungstransistor, einen Ladekondensator sowie einen Zündtransformator umfaßt. Die Zündelektronik 30 ist eingangsseitig an die Energieversorgungsleitung 10 angeschlossen, die mit dem dem Funkenzünder 4 zugeordneten Energiezwischenspeicher 8 verbunden ist. Ausgangsseitig ist die Zündelektronik 30 mit einer Funkenstrecke 32 verbunden, deren Ende 34 in einen Bereich im Innenraum des Sicherheitsbehälters hineinragt, in dem mit einem Störfall bei vermehrter Wasserstofffreisetzung zu rechnen ist.

Der Funkenzünder 4 umfaßt ein mehrschichtig ausgebildetes Gehäuse 36, dessen Außenmantel 38 aus einem hochtemperaturfesten Material, wie beispielsweise VA-Stahl oder Titan, besteht. Innerhalb des Außenmantels 38 ist ein Isoliermantel 40 angeordnet, der im Ausführungsbeispiel in der Art einer Doppelmantelausführung als Luftspalt zwischen dem Außenmantel 38 und einem Innenmantel 42 ausgebildet ist. Alternativ kann für den Isoliermantel 40 auch ein zwischen dem Außenmantel 38 und dem Innenmantel 42 angeordneter temperatur- und strahlenbeständiger Isolierstoff vorgesehen sein.

Innerhalb des Gehäuses 36 ist die Zündelektronik 30 in einem als Strahlenabschirmung ausgebildeten Innengehäuse 44 angeordnet. Der Zwischenraum 46 zwischen dem Innengehäuse 44 und dem Innenmantel 42 ist in der Art eines Wasserbades bis zu einem Pegel 48 mit Wasser W aufgefüllt, das als in den Funkenzünder 4 integrierte Wärmesenke dient.

Das Innengehäuse 44 ist über ein aus Isoliermaterial bestehendes Befestigungselement 50 am Gehäuse 36 befestigt. Das Gehäuse 36 ist auf seiner der Funkenstrecke 32 zugewandten, mit einem Deckel 52 verschlossenen Stirnseite mit einem keramischen Hitzeschild 54 versehen. Der Innenraum 46 kommuniziert über eine mit einem Sicherheitsventil 56 absperrbare Ablaßleitung 58 mit dem Außenraum des Gehäuses 36.

Das Gehäuse 36 ist über ein Befestigungselement 60 an der Innenwand 3 aufgehängt. Das über das Befestigungselement 60 an der Innenwand 3 aufgehängte Gehäuse 36 ist dabei von einem weiteren, unmittelbar an der Innenwand angeordneten Isoliermantel 62 umgeben.

Bei einem Störfall innerhalb des Sicherheitsbehälters 2 wird mittels des Wasserstoffsensors 28 oder mittels der als Sensoren vorgesehenen Temperaturgebern 16 und/oder Druckschalter 18 festgestellt, ob Wasserstoff freigesetzt wurde. Falls dies der Fall ist, so werden manuell über die Auslöseeinheit 24 oder automatisch über die in den Energiezwischenspeichern 8 integrierten Selbstauslöser 14 die Funkenzünder 4 aktiviert. Über die Funkenstrecke 32 jedes Funkenzünders 4 wird dabei an ihrem Ende 34 ein Zündfunke erzeugt, der zu einer kontrollierten Verbrennung oder Rekombination des Wasserstoffs führt. Aufgrund der als Schnelltaktzünder ausgebildeten Funkenzünder 4 mit einer Betriebsfrequenz von etwa 100 Hz ist dabei eine zuverlässige Zündung des Wasserstoffs auch bei vergleichsweise schnellen Gasverschiebevorgängen mit Strömungsgeschwindigkeiten von mehr als 10 m/s sicher gewährleistet. Zudem ist aufgrund der hohen Betriebsfrequenz der Funkenzünder 4 eine besonders starke Vorionisierung des Gasgemisches gewährleistet, so daß auch bei wenig bewegter Gasatmosphäre eine frühzeitige Zündung direkt nach Überschreiten der Zündergruppe sichergestellt ist. Die Verbrennungslasten bei einer Zündung sind somit besonders gering.

Das Zündsystem 1 ist für eine besonders hohe Betriebssicherheit auch bei verschiedenartigen Störfallsituationen ausgelegt. Durch den zweistufigen Aufbau des Energieversorgungssystems 6 für die Funkenzünder 4 ist das Zündsystem 1 sowohl für einen mittelfristigen autarken Betrieb als auch für einen langfristigen Dauerbetrieb geeignet. Im mittelfristigen Autarkbetrieb erfolgt die Energieversorgung für die Funkenzünder 4 ausschließlich über die Energiezwischenspeicher 8, die ohne Nachspeisung von außen eine Betriebszeit von mindestens 24 h sicherstellen. Ein zuverlässiger Betrieb des Zündsystems 1 ist somit auch bei Ausfall externer Vorrichtungen gewährleistet. Über die zentrale Energieversorgungseinheit 7 ist zudem auch ein sicherer Langzeitbetrieb des Zündsystems 1 gewährleistet.

Aufgrund ihres Aufbaus sind die Funkenzünder 4 für eine hohe Betriebssicherheit auch bei verschiedenartigen Unfallszenarien ausgelegt. Die Funktionssicherheit der jeweiligen Zündelektronik 30 ist dabei auch bei hohen Außentemperaturen infolge des jeweiligen Störfalls sichergestellt. Dazu trägt neben dem im Gehäuse 36 jedes Funkenzünders 4 vorgesehenen Isoliermantel 40 besonders auch die integrierte Wärmesenke in Form des das Innengehäuse 44 umgebenden Wassers W bei. Das Wasser W verdampft nämlich infolge erhöhter Temperatur und trägt somit durch seine Verdampfungskälte zur Kühlung der Zündelektronik 30 bei. Eine besonders lange Betriebsdauer ist dabei durch das Sicherheitsventil 56 gewährleistet. Über das Sicherheitsventil 56 ist nämlich die Ablaßrate des verdampften Wassers W aus dem Gehäuse 36 einstellbar. Auch bei begrenztem Wasservorrat ist somit die integrierte Wärmesenke für einen besonders langen Betriebszeitraum verfügbar.

## Patentansprüche

1. Sicherheitsbehälter (2) einer kerntechnischen Anlage, in dessen Innenraum eine Anzahl von Funkenzündern (4) eines Zündsystems (1) zur Rekombination von Wasserstoff in einem Gasgemisch angeordnet sind,
**dadurch gekennzeichnet, daß** jeder Funkenzünder (4) als Schnelltaktzünder mit einer Betriebsfrequenz von mehr als etwa 10 Hz ausgebildet ist.

2. Sicherheitsbehälter (2) nach Anspruch 1, dessen Funkenzünder (4) als Niederenergiezünder mit einer Betriebsleistung von weniger als 10W, vorzugsweise von weniger als 5 W, ausgebildet sind.

3. Sicherheitsbehälter (2) nach Anspruch 1 oder 2, bei dem die Funkenzünder (4) zur Energieversorgung gruppenweise zusammengeschaltet sind, wobei jeweils eine Gruppe von Funkenzündern (4) an einen ihnen gemeinsamen Energiezwischenspeicher (8) angeschlossen ist, und wobei die Energiezwischenspeicher (8) an eine zentrale Energieversorgungseinheit (7) angeschlossen sind.

4. Sicherheitsbehälter (2) nach Anspruch 3, bei dem jeder Energiezwischenspeicher (8) einen Selbstauslöser (14) mit einem katalytisch beschichteten Temperaturgeber umfaßt.

5. Sicherheitsbehälter (2) nach Anspruch 3 oder 4, bei dem jeder Energiezwischenspeicher (8) einen Selbstauslöser (14) mit einem integrierten Druckschalter umfaßt.

6. Sicherheitsbehälter (2) nach einem der Ansprüche 3 bis 5, bei dem jeder Energiezwischenspeicher (8) eine Kühleinheit (29) aufweist.

7. Sicherheitsbehälter (2) nach einem der Ansprüche 1 bis 6, bei der jeder Funkenzünder (4) ein als Strahlenschutz für seine Zündelektronik (30) ausgebildetes Innengehäuse (44) aufweist.

8. Sicherheitsbehälter (2) nach einem der Ansprüche 1 bis 7, bei dem jeder Funkenzünder (4) jeweils ein Gehäuse (36) mit einem Isoliermantel (42) aufweist.

9. Sicherheitsbehälter (2) nach einem der Ansprüche 1 bis 8, bei dem jeder Funkenzünder (4) eine integrierte Wärmesenke aufweist.

10. Sicherheitsbehälter (2) nach einem der Ansprüche 1 bis 9, bei dem jeder Funkenzünder (4) jeweils an eine mit einem Sicherheitsventil (56) absperrbare Ablaßleitung (58) für ein Kühlmittel aufweist.

## Claims

1. Containment (2) of a nuclear facility, in the interior of which a plurality of spark igniters (4) of an ignition system (1) for the recombination of hydrogen in a gas mixture are arranged, **characterized in that** each spark igniter (4) is designed as a highspeed igniter with an operating frequency in excess of about 10 Hz.

2. Containment (2) according to Claim 1, the spark igniters (4) of which are designed as low-energy igniters with an operating power of less than 10 W, preferably less than 5 W.

3. Containment (2) according to Claim 1 or 2, in which the spark igniters (4) are connected together in groups in order to supply them with energy, each group of spark igniters (4) being connected to an intermediate energy store (8) common to them, and the intermediate energy stores (8) being connected to a central power supply unit (7).

4. Containment (2) according to Claim 3, in which each intermediate energy store (8) comprises an automatic trigger (14) with a catalytically coated temperature sensor.

5. Containment (2) according to Claim 3 or 4, in which each intermediate energy store (8) comprises an automatic trigger (14) with an integral pressure switch.

6. Containment (2) according to one of Claims 3 to 5, in which each intermediate energy store (8) has a cooling unit (29).

7. Containment (2) according to one of Claims 1 to 6, in which each spark igniter (4) has an internal housing (44) designed as radiation protection for its ignition electronics (30).

8. Containment (2) according to one of Claims 1 to 7, in which each spark igniter (4) has a respective housing (36) with an insulating casing (42).

9. Containment (2) according to one of Claims 1 to 8, in which each spark igniter (4) has an integral heat sink.

10. Containment (2) according to one of Claims 1 to 9, in which each spark igniter (4) has a respective discharge line (58) for a coolant which can be closed off using a safety valve (56).

## Revendications

1. Enceinte (2) de confinement d'une installation du génie nucléaire à l'intérieur de laquelle sont disposés un certain nombre d' amorceurs (4) à étincelle d'un système (1) d'amorçage pour la combinaison de l'hydrogène d'un mélange gazeux,
**caractérisée en ce que** chaque amorceur (4) à étincelle est constitué sous la forme d'un amorceur à cadence rapide ayant une fréquence de fonctionnement de plus d'environ 10 Hz.

2. Enceinte (2) de confinement suivant la revendication 1, dont les amorceurs (4) à étincelle sont constitués sous la forme d'amorceur à basse énergie ayant une puissance de fonctionnement de moins de 10 W, de préférence de moins de 5 W.

3. Enceinte (2) de confinement suivant la revendication 1 ou 2, dans laquelle les amorceurs (4) à étincelle sont montés ensemble par groupe pour l'alimentation en énergie, un groupe d'amorceurs (4) à étincelle étant raccordé, respectivement, à un accumulateur (8) intermédiaire d'énergie qui leur est commun et les accumulateurs (8) intermédiaires d'énergie étant raccordés à une unité (7) centrale d'alimentation en énergie.

4. Enceinte (2) de confinement suivant la revendication 3, dans laquelle chaque accumulateur (3) intermédiaire d'énergie comprend un autodéclencheur (14) ayant une sonde de température revêtue catalytiquement.

5. Enceinte (2) de confinement suivant la revendication 3 ou 4, dans laquelle chaque accumulateur (8) intermédiaire d'énergie comprend un autodéclencheur (14) ayant un circuit imprimé intégré.

6. Enceinte (2) de confinement suivant l'une des revendications 3 à 5, dans laquelle chaque accumulateur (8) intermédiaire d'énergie a une unité (29) de refroidissement.

7. Enceinte (2) de confinement suivant l'une des revendications 1 à 6, dans laquelle chaque amorceur (4) à étincelle a un boîtier (44) intérieur constitué sous la forme d'une protection vis-à-vis du rayonnement pour son électronique (30) d'amorçage.

8. Enceinte (2) de confinement suivant l'une des revendications 1 à 7, **caractérisée en ce que** chaque amorceur (4) à étincelle a, respectivement, un boîtier (36) ayant une chemise (42) isolante.

9. Enceinte (2) de confinement suivant l'une des revendications 1 à 8, dans laquelle chaque amorceur (4) à étincelle a un puits de chaleur intégré.

10. Enceinte (2) de confinement suivant l'une des revendications 1 à 9, dans laquelle chaque amorceur (4) à étincelle a, respectivement, un conduit (58) d'évacuation d'un fluide de refroidissement qui peut être fermé par une vanne (56) de sécurité.
